# EUROPEAN PATENT APPLICATION

(11) **EP 0 854 556 A2**
(43) Date of publication of application: **22.07.1998**
(21) Application number: 97122093.4
(22) Date of filing: 15.12.1997
(51) Int. Cl.: H02J 7/10

(54) **Charger and charging method for non-aqueous electrolyte secondary batteries**

(30) Priority: 13.12.1996 JP 352769/96
(71) Applicant: ASAHI GLASS COMPANY LTD., Chiyoda-ku Tokyo 100 (JP); ELNA Company Ltd., Fujisawa-shi Kanagawa-ken (JP)
(72) Inventor: Ikeda, Katsuji, Asahi Glass Co., Ltd., Yokohama-shi, Kanagawa (JP); Hiratsuka, Kazuya, Asahi Glass Co., Ltd., Yokohama-shi, Kanagawa (JP)
(74) Representative: Müller-Boré & Partner Patentanwälte

(57) **Abstract**

A constant current circuit (CI) is connected to a positive side of a charging power supply through a reverse current blocking diode (D2). A constant voltage circuit (CV) is connected between the constant current circuit and a negative side of the charging power supply. A nonaqueous secondary battery (B1) is connected in parallel with the constant voltage to be charged.

## Description

The present invention relates to a charger and a charging method for nonaqueous electrolyte secondary batteries such as a lithium secondary battery and a lithium ion secondary battery.

Although a nickel-cadmium battery, a nickel-hydrogen battery and so on have been generally known as secondary batteries, use of a lithium secondary battery or a lithium ion secondary battery has been rapidly developed in the recent years since secondary batteries are required to have a high energy density in order to make mobile communication instruments, notebook-size personal computers, camcorders and so on compact and lightweight.

Although various kinds of chargers which are fitted to the characteristics of respective cells or batteries have become available, nonaqueous electrolyte secondary batteries such as a lithium secondary battery and a lithium ion secondary battery can not react on a counter electrode an oxygen gas produced therein in a fully charged state (a sate charged up to rated voltage) and return it into water unlike aqueous batteries represented by a nickel-cadmium battery and a nickel-hydrogen battery.

In the nonaqueous electrolyte secondary batteries, it is necessary to provide an upper limit to a charged voltage to prevent a gas from being produced in the batteries by decomposition of a nonaqueous electrolyte and to make the electrodes stably operated in order to avoid the danger of a degradation in a battery performance and battery explosion, in addition to the need for usual constant current charging.

With regard to relatively small lithium secondary batteries for memory backup, there have been known a simple charging circuit wherein a series connection of a lithium secondary battery and a current limiting resistor is connected to a charging power supply through a reverse current blocking diode, and a voltage substantially equal to the upper limit voltage of the battery is supplied by the charging power supply, and a simple charging circuit wherein although a charging power supply provides a secondary battery to be charged with a voltage not less than the upper limit voltage of the battery, the battery is connected to the charging power supply through only a current limiting resistor or a combination of a current limiting resistor and a reverse current blocking diode, and the secondary battery is connected in parallel with a Zener diode to limit the upper voltage applied to the secondary battery.

However, when the charging power supply is turned on in these charging circuits, a current is supplied to an equipment to be backed up from the lithium secondary battery. If the charging power supply is turned on again in such state that the lithium secondary battery has completely discharged, a great deal of rush current flows immediately after starting charging, creating a problem in that the battery performance is degraded.

If a plurality of lithium secondary batteries are connected in series to obtain a high voltage, and if the series connection of the batteries is charged by such a simple charging circuit, the charging voltage is not equal applied to the respective batteries because of variations in the battery characteristics of the respective batteries. A voltage which is beyond the upper limit for stably and safely charging a battery is applied to some of the batteries, creates problems in that the battery performance is degraded and that explosion occurs.

Nonaqueous electrolyte secondary batteries having a relatively greater capacity, in particular,lithium ion batteries, have been used as a power source for mobile communication instruments such as cellular phones and notebook-size personal computers. With regard to such nonaqueous electrolyte secondary batteries, there has been mainly adopted a charging method wherein both charging in a constant current region with a current kept constant and charging in a constant voltage region with a voltage kept constant are carried out, and wherein the magnitude of the charging current in the constant voltage region is detected, and charging is stopped when the detected current reaches a predetermined set current value (e.g. JP-A-5111184).

According to such a charging method having the constant current charging and the constant voltage charging, it is possible to stably and safely charge lithium ion secondary batteries even if the batteries are connected in series to obtain a relatively greater capacity. However, the charging method requires improvement in cost because many semiconductors, several external parts to be fitted and a specialized integrated circuit are needed.

The present invention is provided to meet with such requirement. It is an object of the present invention to provide a charger and a charging method for nonaqueous electrolyte secondary batteries, which are capable of stably and safely charging a nonaqueous electrolyte secondary battery at a low cost without degrading the battery performance.

The present invention is characterized in that there are provided a d.c. charging power supply, a constant current circuit connected to a positive side of the charging power supply through a reverse current blocking diode for preventing a reverse current to the power supply, and a constant voltage circuit connected between the constant current circuit and a negative side of the charging power supply; a nonaqueous electrolyte secondary battery to be charged is connected in parallel with the constant voltage circuit; the secondary battery is charged at a constant current by the constant current circuit until a charged voltage of the secondary battery reaches a constant voltage value determined by the constant voltage circuit; and the secondary battery is charged at a constant voltage by the constant voltage circuit when the charged voltage of the secondary battery becomes not less than the constant voltage value.

It is preferable that the constant current circuit is constituted by a series connection of a field effect transistor and a resistor and that the constant voltage circuit is constituted by a Zener diode, reducing the total cost.

If a plurality of nonaqueous electrolyte secondary batteries to be charged are connected in series, the same number of Zener diodes are provided in the constant voltage circuit, and the respective Zener diodes are parallelly assigned to the respective secondary batteries. As a result, the upper limit for charging the respective secondary batteries can be independently determined to establish equal application of voltage.

Although variations in the characteristics of Zener diodes generally causes make the breakdown voltage variable depending on a change in the magnitude in the current flowing therethrough, the present invention can operate a Zener diode at a constant current by the constant current circuit to retrain the variations due to the characteristics.

It is preferable that additional reverse current blocking diodes are respectively connected between the Zener diode and the secondary battery, and between a junction of the secondary battery to the constant voltage circuit and a load side of the secondary battery. As the additional reverse current blocking diodes, schottky diodes having a small forward voltage are appropriate.

When a nonaqueous electrolyte secondary battery is charged by the charger according to the present invention, the constant voltage circuit is not activated, and the secondary battery is exclusively charged at a constant current determined by the constant current circuit in a case wherein the remaining voltage of the secondary battery is not higher than the breakdown voltage of the Zener diode at the time of starting charging.

The charged voltage of the secondary battery is raised as the charging progresses. When the charged voltage of the secondary battery reaches a voltage near to the breakdown voltage of the Zener diode, the charging current is divided into a flow through the Zener diode and a flow through the secondary battery, keeping the charged voltage of the secondary battery constant and carrying out charging at a constant voltage. When the charging is carried out at the constant voltage, the current flowing through the secondary battery is gradually decreased, and is finally reduced to a current value which compensates for the self-discharging of the secondary battery.
Figure 1 is a circuit diagram showing the charger according to a first embodiment of the present invention;
Figure 2 is a circuit diagram showing the charger according to a second embodiment of the present invention; and
Figure 3 is a characteristic diagram of a charging voltage and a charging current with respect to a charging time to explain the operation of the second embodiment.

Now, preferred embodiments shown in the accompanying drawings will be described for better comprehension of the technical idea of the present invention.

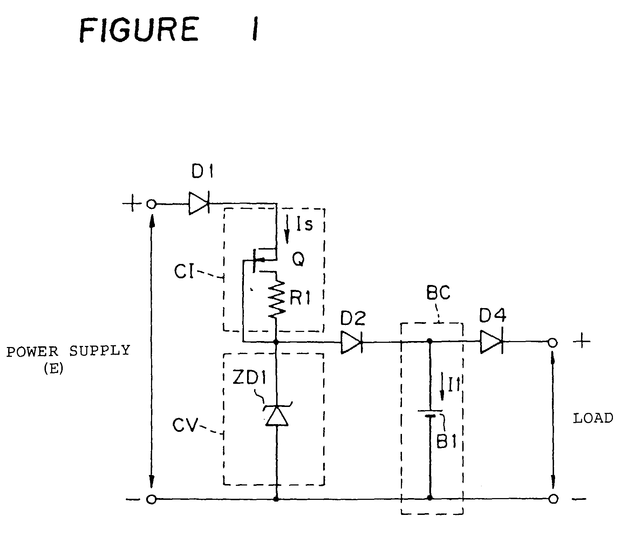

In Figure 1, there is shown a first embodiment according to the present invention, wherein a single nonaqueous electrolyte secondary battery, e.g. a lithium ion secondary battery B1 is charged. The charger according to the first embodiment includes a d.c. charging power supply E, which has a positive side connected to a constant current circuit CI through a first reverse current blocking diode D1. A constant voltage circuit CV is connected between the constant current circuit CI and a negative side of the charging power supply E.

In this embodiment, the constant current circuit CI is constituted by a field effect transistor Q and a resistor R1. The constant voltage circuit CV is constituted by a Zener diode. In this embodiment, the single secondary battery B1 is charged, and accordingly the single Zener diode ZD1 is provided in the constant voltage circuit CV.

A battery loading portion BC is connected to the constant voltage circuit CV so that the secondary battery B1 to be charged is connected in parallel with the constant voltage circuit CV. A second reverse current blocking diode D2 is arranged between the constant voltage circuit CV and the battery loading portion BC to block a reverse current directed to the side of the constant voltage circuit CV.

In addition, a third reverse current blocking diode D4 is arranged between the battery loading portion BC and a load (appliance) side of the secondary battery B1 to block a reverse current from the load side.

The charging power supply E has an output voltage set to be higher than the breakdown voltage VZ of the Zener diode ZD1 forming the constant voltage circuit CV.

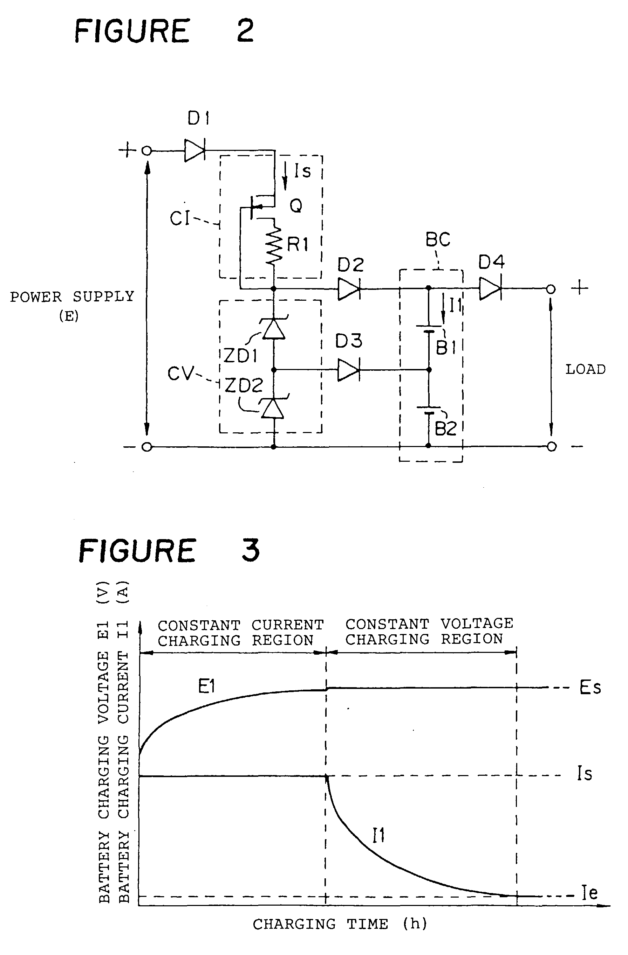

In Figure 2, there is shown a second embodiment wherein two secondary batteries are charged. In this case, the two secondary batteries B1 and B2 are loaded in the battery loading portion BC so that the batteries are connected in series. Accordingly, two Zener diodes ZD1 and ZD2 connected in series are provided in the constant voltage circuit CV.

One of the Zener diodes ZD1 is assigned to the secondary battery B1, and the other Zener diode ZD2 is assigned to the secondary battery B2. Reverse current blocking diodes D2 and D3 are respectively arranged between the one Zener diode ZD1 and the secondary battery B1 and between the other Zener diode ZD2 and the secondary battery B2 to block reverse currents directed to the sides of the Zener diodes ZD1 and ZD2. In the second embodiment, the charging power supply E has an output voltage set to be 2 times higher than the breakdown voltage VZ of each of the Zener diode ZD1 and Zd2 since the two Zener diodes are connected in series.

The Zener diodes and the reverse current blocking diodes therefore are added according to an increase in the number of the secondary batteries to be charged though the second embodiment is similar to the first embodiment in terms of its basic structure.

The operation of the charger according to the second embodiment will be explained in reference to the characteristic diagram about the relationship of a charging voltage and a charging current with respect to a charging time shown in Figure 3. Provided that the remaining voltage of the secondary batteries B1 and B2 is a low voltage near to a discharged state, and that a charging current I1 is supplied to the secondary batteries B1 and B2, the charged voltage E1 of each of the secondary battery is not higher than the breakdown voltage VZ of the Zener diodes ZD1 and ZD2 in an initial charging region. The charging current I1 is limited to a constant current value Is by the constant current circuit CI though the charging current has the tendency to become greater.

Accordingly, the respective secondary batteries B1 and B2 are charged at a constant current having the constant current value Is in the initial charging region. The current value Is is preferable to be set to have substantially a value between 0.05 - 1.0 CA though the value varies on the kinds of secondary batteries to be charged.

The charged voltages of the secondary batteries are raised by continuing charging. When the charged voltages approach near to the breakdown voltages VZ of the Zener diodes ZD1 and ZD2, currents gradually start to flow in the Zener diodes ZD1 and ZD2, and the charging current I1 which flows through the respective secondary batteries B1 and B2 is gradually decreased. When the charged voltages of the secondary batteries reach the breakdown voltage VZ, almost no current flows through the secondary batteries B1 and B2.

As explained, the voltages applied to the respective secondary batteries B1 and B2 are limited to a constant charging voltage Es by the Zener diodes ZD1 and ZD2 in a last charging region.

After that, a current Ie continues to flow through the secondary batteries B1 and B2 to compensate for self-discharge, and the secondary batteries B1 and B2 maintain a fully charged state until the charging power supply E is turned off.

Although the present invention has been specifically described with respect to the respective embodiments, the present invention is not limited to these embodiments. For example, the constant current circuit CI is not limited to a combination of the field effect transistor Q and the resistor R1.

As explained, in accordance with the charger and the charging method of the present invention, it is not necessary to combine expensive parts such as an operational amplifier in a complicated arrangement unlike the prior art in order to charge a aqueous electrolyte secondary battery at a constant voltage after having charged it at a constant current. The charger is constituted by inexpensive parts as a whole. The charger can charge a nonaqueous electrolyte secondary battery in a stable and safe way without degrading performance though the charger can be prepared at a low cost.

## Claims

1. A charger for a nonaqueous electrolyte secondary battery, comprising:
a d.c. charging power supply;
a constant current circuit connected to a positive side of the charging power supply through a reverse current blocking diode; and
a constant voltage circuit including a Zener diode connected between the constant current circuit and a negative side of the charging power supply;
wherein a nonaqueous electrolyte secondary battery to be charged is connected in parallel with the constant voltage circuit, the secondary battery is charged at a constant current by the constant current circuit until a charged voltage of the secondary battery reaches a constant voltage value determined by the constant voltage circuit, and the secondary battery is charged at a constant voltage by the constant voltage circuit when the charged voltage of the secondary battery becomes not less than the constant voltage value.

2. A charger for a nonaqueous electrolyte secondary battery according to Claim 1, wherein the constant current circuit comprises a series circuit of a field effect transistor and a resistor.

3. A charger for a nonaqueous electrolyte secondary battery according to Claim 1 or 2, wherein when a plurality of nonaqueous electrolyte secondary batteries to be charged are connected in series and the series connection of the secondary batteries is connected in parallel with the constant voltage circuit, the constant voltage circuit includes the same number of Zener diodes, and the respective Zener diodes are parallelly assigned to the respective secondary batteries.

4. A charger for a nonaqueous electrolyte secondary battery according to any one of Claims 1 to 3, wherein a second reverse current blocking diode is connected between the Zener diode and the secondary battery to prevent a current from flowing in a direction opposite to a charging direction.

5. A charger for a nonaqueous electrolyte secondary battery according to any one of Claims 1 to 4, wherein a third reverse current blocking diode is connected between a junction of the secondary battery to the constant voltage circuit and a load side of the secondary battery to prevent a reverse current from the load side.

6. A method for charging a nonaqueous electrolyte secondary battery, wherein there are provided a d.c. charging power supply, a constant current circuit connected to a positive side of the charging power supply through a reverse current blocking diode, and a constant voltage circuit connected between the constant current circuit and a negative side of the charging power supply; and wherein a nonaqueous electrolyte secondary battery is connected in parallel with the constant voltage circuit; comprising:
charging the secondary battery at a constant current by the constant current circuit until a charged voltage of the secondary battery reaches a constant voltage value determined by the constant voltage circuit; and
charging the secondary battery at a constant voltage by the constant voltage circuit when the charged voltage of the secondary battery becomes not less than the constant voltage value.

7. A method for charging a nonaqueous electrolyte secondary battery according to Claim 6, wherein the constant voltage circuit comprises a Zener diode, and the constant voltage value is determined by a breakdown voltage of the Zener diode.

8. A method for charging a nonaqueous electrolyte secondary battery according to Claim 6 or 7, wherein the constant current circuit comprises a series circuit of a field effect transistor and a resistor.

9. A method for charging a nonaqueous electrolyte secondary battery according to any one of Claims 6 to 8, comprising connecting a plurality of nonaqueous electrolyte secondary batteries in series;
connecting the series connection of the secondary batteries in parallel with the constant voltage circuit;
providing the same number of Zener diodes in the constant voltage circuit; and
parallelly assigning the respective Zener diodes to the respective secondary batteries.

10. A method for charging a nonaqueous electrolyte secondary battery according to Claim 7, wherein the constant current flows through the secondary battery to compensate for self-discharge after the charged voltage of the secondary battery reaches the breakdown voltage of the Zener diode.
